# EUROPEAN PATENT SPECIFICATION

(11) **EP 3 344 494 B1**
(45) Date of publication and mention of the grant of the patent: **27.11.2019**
(21) Application number: 16739184.6
(22) Date of filing: 18.07.2016
(51) Int. Cl.: B60P 3/00, B62D 63/06, G01G 19/12

(54) **A MONITORING SYSTEM FOR USE ON A VEHICLE**
ÜBERWACHUNGSSYSTEM FÜR EIN KRAFTFAHRZEUG
SYSTÈME DE SUPERVISION POUR VÉHICULES

(30) Priority: 02.09.2015 GB 201515525
(43) Date of publication of application: 11.07.2018
(73) Proprietor: Jaguar Land Rover Limited, Coventry, Warwickshire CV3 4LF (GB)
(72) Inventor: STRANO, Giovanni, Coventry Warwickshire CV3 4LF (GB); GREENWOOD, Jeremy, Coventry Warwickshire CV3 4LF (GB); O'DONNELL, Nicholas, Coventry Warwickshire CV3 4LF (GB)
(74) Representative: Holmes, Matthew William
(86) International application number: PCT/EP2016/067041
(87) International publication number: WO 2017/036659

(56) References cited:
- EP-A1- 2 821 761
- WO-A2-2007/133675
- WO-A2-2013/005030
- GB-A- 2 294 112
- GB-A- 2 480 741
- GB-A- 2 491 848
- JP-A- 2001 071 809
- JP-A- 2010 149 555
- NL-C- 1 036 353
- PT-A- 103 877

## Description

### TECHNICAL FIELD

The present disclosure relates to a system for monitoring a cargo holding area associated with a vehicle. Aspects of the invention relate to the system, to a method of monitoring a cargo holding area associated with a vehicle, and to a vehicle comprising a system for monitoring a cargo holding area associated with a vehicle.

### BACKGROUND

When any kind of cargo is being transported in a cargo holding area of a vehicle, for example in a trailer being towed by the vehicle, it is possible that the cargo may move around unexpectedly and/or undesirably. Unwanted movement of the cargo could result in damage to the cargo and/or the cargo holding area. Furthermore, if the cargo moves away from its correct position in the holding area, it could result in an uneven load which makes the vehicle unstable.

Movement in the cargo holding area is particularly likely if the cargo being transported is an animal, for example a horse in a horsebox. If the horse becomes stressed and moves around in the horsebox, it may be difficult for the driver to maintain control of the vehicle. In extreme cases, the horse may partially or fully escape from the horsebox and suffer serious injury. It is also desirable to be able to sense any distress of the animal being transported for the general well-being of the animal.

A problem exists for the vehicle driver in that he may not be aware of movement in the cargo holding area leading to a problem with the cargo and/or the cargo holding area. Therefore, there is a need to monitor the cargo holding area of the vehicle.

Existing monitoring systems are known wherein a camera is provided in the cargo holding area. Live video feed information from the camera is displayed to the vehicle driver by means of a screen provided in the vehicle cabin. The driver monitors visually the status of the cargo holding area via the screen. Whilst this is useful, the driver is only alerted to movement in the cargo holding area if the visual impact of the movement is significant enough to be noticed from the screen by the driver who is otherwise concentrating to a greater extent on driving the vehicle safely. Therefore, the driver may fail to notice when there is a problem with the cargo and/or the cargo holding area. Furthermore, such systems may distract the driver of the vehicle from the primary task of driving safely. In some countries such a system is even contrary to road-use regulations. Increasingly in vehicles a driver is presented constantly with a visual display in the form of a satellite navigation system, and so the presence of two visual display screens, one to monitor the cargo and one to monitor navigational status, is particularly distracting.

Published International Application WO 2013/005030 A2 discloses a monitoring system configured to monitor a cargo holding area in a vehicle during transit, the system comprising a plurality of pressure sensors located within the cargo holding area.

It is one object of the present invention to provide an improved monitoring system for the cargo holding area of a vehicle in consideration of these issues.

### SUMMARY OF INVENTION

Aspects and embodiments of the invention provide a monitoring system for a cargo holding area associated with a vehicle, a method of monitoring a cargo holding area associated with a vehicle and a vehicle comprising a monitoring system, as claimed in the appended claims. According to an aspect of the invention, there is provided a monitoring system for configured to monitoring a cargo holding area associated with a vehicle during transit, the system comprising: a pressure sensing device locatable within the cargo holding area, in use, and configured to provide live load data output indicative of the pressure applied to the pressure sensing device by cargo within the cargo holding area during transit; a determination module for outputting one or more predetermined load pattern states of the cargo; a movement sensor for determining movement of the cargo holding area; a comparator module configured to compare the live load data output with the one or more predetermined load pattern states of the cargo and to determine whether there is a correspondence therebetween; and a notification module configured to output a notification that the cargo is in an unacceptable state during transit in dependence on the result of the comparison; wherein the determination module is configured to receive a movement output from the movement sensor and to adjust the one or more predetermined load pattern states of the cargo in response to the movement output.

In one embodiment, the comparison states are acceptable states of the cargo so that the notification module is configured to provide the notification if the determined state of the cargo does not correspond to the one or more acceptable comparison states. In other embodiments, however, the comparison states may be unacceptable states of the cargo so that it is only when there is a correspondence between the determined state and the comparison states that the notification is provided.

Reference to 'correspondence' includes not just an exact match between the output and the one or more comparison states, but any similarity between the output and the comparison state which falls within an acceptable deviation from the comparison state(s). By way of example, the correspondence may be determined by means of comparing the magnitude of pressure applied at various locations across the pressure sensing device, by comparing the maximum pressure applied at any one location across the device, and/or by comparing the frequency of fluctuations in the pressure applied at any one location. It is envisaged that other factors may also be used to determine whether there is a correspondence between the pressure output and the comparison state(s).

The invention provides a monitoring system for a cargo holding area of a vehicle that allows a vehicle user to monitor effectively the cargo holding area whilst overcoming some of the disadvantages associated with the prior art. Since a notification is provided to the vehicle user on the condition that the state of the cargo is unacceptable, the vehicle user can be prompted to monitor actively the cargo holding area only when the system detects that there is a problem with the cargo. The pressure sensing device may be configured for mounting on the floor of the cargo holding area. This allows the pressure sensing device to indicate the pressure exerted on the floor of the cargo holding area. The pressure sensing device may comprise a pressure sensitive mat. Such pressure sensitive mats are used for medical applications such as foot function and gait analysis, for example. Therefore, the system can advantageously include components that are already readily available.

The pressure mat may extend across substantially the whole floor area in the cargo holding area or in other embodiments may extend across only a selected portion of the floor of the cargo holding area. This allows the system to be appropriately configured for a number of different applications.

The pressure mat optionally comprises a two dimensional array of pressure sensitive devices. The pressure output of the pressure sensing device is in the form of a two dimensional pressure map of the floor of the cargo holding area for comparison with one or more two-dimensional pressure maps representing the comparison states of the cargo. Features of the output pressure map may depend on the configuration of the sensor array. The array may consist of any suitable number of individual pressure sensors with any appropriate pressure resolution in order to provide a pressure map output of sufficient detail for a particular application.

In some embodiments, the determination module includes a learning module for updating the comparison states based on the pressure output of the pressure sensing device during periods prior to the comparison taking place for which the state of the cargo is acceptable. This allows the system to take into account prior learnt behaviour of the system to determine the comparison states.

The periods prior to the comparison taking place are optionally user-selectable periods when a user determines that the state of the cargo is acceptable. This advantageously allows the user, who has familiarity with the acceptable configuration(s) of the cargo being transported, to judge what constitutes an acceptable/unacceptable state of the cargo.

Alternatively, the comparison states of the cargo may be pre-determined states of the cargo stored on a data memory. This allows the system to set comparison states that are applicable to any cargo in the cargo holding area, without requiring that the user is familiar with the cargo.

The monitoring system may comprise an output to a visual display and the notification module may be configured to provide the notification to the vehicle user via the output to the visual display. Thus, the vehicle user can be alerted if the cargo is in an unacceptable state.

The output may include a wireless transmitter to provide the notification to a visual display that is remote from or separate to the vehicle. This allows the user to effectively monitor the state of the cargo even when remote from the vehicle. For example, this embodiment of the system may alert the user to theft of cargo from the cargo holding area.

The monitoring system may comprise an image capture device for capturing image data from the cargo holding area. This allows the user to visually monitor the cargo holding area.

The notification module may be configured to provide captured image data to the output to the visual display only in the event that the cargo is determined to be in an unacceptable state. Therefore, the vehicle user need not be distracted from driving by the constant display of image data from the cargo holding area, as is the case in prior systems.

The monitoring system may comprise a human machine (HMI) interface configured to permit user inputs relating to the type of cargo to be transported within the cargo holding area. The HMI may comprise a selection module configured to permit user inputs of selected cargo from a list of different cargos. This allows the comparison states to be determined in dependence on the selected nature of the cargo.

The movement sensor allows the system to take into account the natural movement of the cargo holding area to determine the comparison states.

The comparator module may be configured to compare the pressure output from the pressure sensing device with a pressure threshold representative of pressure applied to one or more points on the pressure sensing device, thereby to determine whether there is a correspondence with the one or more comparison states of the cargo. This allows the system to alert the user if the pressure applied by the cargo exceeds a maximum pressure threshold.

Alternatively, the comparator module may be configured to compare the pressure output from the pressure sensing device with one or more comparison states of the cargo in the form of a frequency of change of pressure applied to one or more selected locations on the pressure sensing device, in order to determine whether there is a correspondence with the one or more comparison states of the cargo. This allows the system to alert the driver if there is excessive movement in the cargo holding area.

The monitoring system may comprise a sub-system for determining whether the vehicle is in a safe mode. The notification module is configured to provide the notification to a user only if the vehicle is determined to be in the safe mode. Therefore, the system only provides notifications to the user if it is safe to do so.

According to another aspect of the invention, there is provided a vehicle comprising a monitoring system as set out in the previous aspect of the invention, the vehicle having a cargo holding area including a floor carrying the pressure sensing device. The cargo holding area may be in the form of a trailer and/or a horsebox. The horsebox may share a common axle with a vehicle cabin. Alternatively, the vehicle may be a transporter lorry including at least one floor for carrying cargo. Accordingly, the system may be provided to any suitable cargo holding area.

According to a further aspect of the invention, there is provided a method of monitoring a cargo holding area associated with a vehicle during transit, the method comprising: sensing a pressure applied by cargo within the cargo-holding area and providing live load data output indicative of the pressure applied by cargo within the cargo holding area during transit; receiving a movement output from a movement sensor indicating movement of the cargo holding area; determining whether the live load data output corresponds to one or more predetermined load pattern states of the cargo; and outputting a notification that the cargo is in an unacceptable state during transit in dependence of the result of the comparison; wherein the one or more predetermined load pattern states of the cargo are adjusted in response to the movement output.

The method may comprise determining the type of cargo to be transported within the cargo holding area, allowing the comparison states to be adjusted depending on the nature of the cargo.

The method may comprise updating the comparison states based on the pressure applied by the cargo within the cargo holding area during periods prior to determining whether the state of the cargo corresponds to one or more comparison states of the cargo, the periods prior to determining whether the state of the cargo corresponds to one or more comparison states of the cargo optionally being user-selectable periods when a user determines that the state of the cargo is acceptable.

The method may comprise comparing the pressure applied by cargo in the cargo holding area with a pressure threshold to determine whether there is a correspondence with the one or more comparison states of the cargo.

The method may comprise comparing the pressure applied by cargo in the cargo holding area with one or more comparison states of the cargo in the form of a frequency of change of pressure applied to determine whether there is a correspondence with the one or more comparison states of the cargo.

According to another aspect of the invention, there is provided a computer program product comprising a non-transitory computer readable medium including computer readable program code, wherein the computer readable program code when executed causes a processor to implement the method as set out in the previous aspect.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 is a schematic representation of a vehicle towing a trailer in the form of a horse box, the vehicle comprising a monitoring system in accordance with an embodiment of the invention;
Figure 2 is a schematic representation of an alternative vehicle-trailer arrangement with which the monitoring system of embodiments of the invention may be used;
Figure 3 is a schematic diagram to illustrate the signal processing of signals from a pressure sensitive device of the monitoring system;
Figure 4 is a schematic diagram showing features of the monitoring system in Figure 1 in more detail; and
Figure 5 is a flow diagram illustrating steps of a method that may be performed by the monitoring system in Figures 1 to 4.

### DETAILED DESCRIPTION

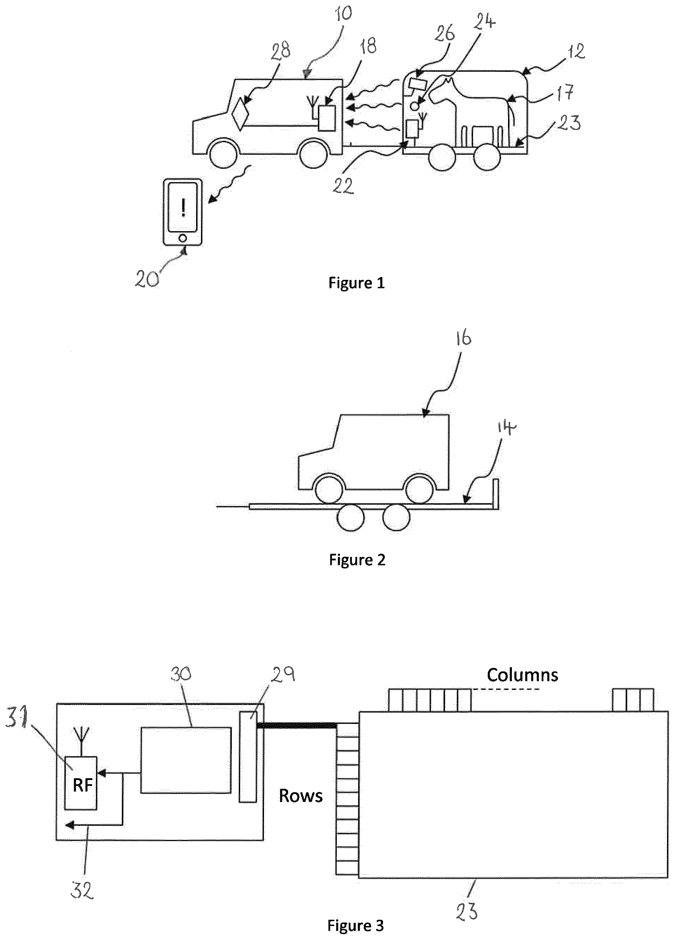

Referring to Figure 1, a vehicle 10 is shown having a cargo holding area defined within a trailer 12 being towed by the vehicle 10. In other embodiments of the invention, the cargo holding area may be realised as a boot or trunk of the vehicle or as any other suitable means for transporting cargo. For example the vehicle may be a transporter vehicle or car carrier having a cargo holding area in the form of a platform 14 (single storey or double storey) for carrying vehicles 16, as shown in Figure 2. In another embodiment the vehicle may take the form of an integrated horsebox vehicle in which the cargo holding area for horses is integral with the vehicle cabin.

It should be noted at this stage that the accompanying Figures 1 and 2 are schematic and have been simplified for the purposes of clarity and to avoid unnecessary detail obscuring the principle form of the invention. In practice, of course, the vehicle 10 would include many more components. The skilled person will appreciate that additional conventional components would be present in a practical implementation of the vehicle 10 and so their presence is implied.

Referring specifically to Figure 1, the vehicle 10 is provided with a monitoring system of an embodiment of the invention which allows a user of the vehicle 10 to monitor effectively the status of cargo, in the form of livestock (e.g. a horse 17), within the trailer 12.

The vehicle 10 includes a computer system 18 which is arranged to monitor (i.e. receive data signals related to) a number of vehicle parameters in order to control various vehicle settings. The computer system 18 may form an integral part of the vehicle 10 at the time of purchase and consist solely of hardware carried on the vehicle 10, in which case the skilled person will appreciate that aspects of the computer system 18 may be spatially distributed throughout the vehicle 10, including in the trailer 12. The skilled person will also appreciate that the computer system 18 may in full or in part be provided by a device that is carried on-board the vehicle 10, such as the user's personal device 20 (e.g. a tablet or mobile phone). With this in mind, various elements of the invention may be embodied in an application running on the vehicle user's personal mobile device 20. In addition, the computer system 18 may be provided fully or in part at a location remote from the vehicle 10 and vehicle systems may communicate wirelessly with those aspects of the computer system 18 that are provided remotely, as will be apparent from the following description.

In the context of the invention, the role of the computer system 18 is to provide a notification to the vehicle user indicating whether the status of the horse 17 within the trailer 12 is acceptable. As will be discussed in more detail later, many factors may be taken into consideration when defining what constitutes an 'acceptable' state of the horse 17 within the trailer 12.

To provide an indication of the state of the horse within the trailer 12, the monitoring system comprises a pressure sensing device 22 mounted on the floor of the trailer. The pressure sensing device 22 includes a pressure mat 23 comprising an integrated array of pressure sensors arranged in a two-dimensional plane extending across the floor of the trailer 12. The pressure sensing device 22 provides an output in the form of a pressure map which correlates the output of each individual pressure sensor of the pressure mat 23 with the position of that pressure sensor within the array. Thus, the output of the pressure sensing device 22 indicates the pressure exerted on the floor of the trailer 12 as a function of position in a two-dimensional array.

The pressure mat 23 may extend across substantially the whole floor area in the trailer 12, or in other embodiments may extend across only a selected portion of the floor of the trailer 12 depending on the expected positioning of the horse 17 on the floor.

The monitoring system is also provided with an inertial measurement unit (IMU) 24 or movement sensor which measures the movement of the trailer 12. The IMU 24 provides the computer system 18 with a signal indicating, for example, the velocity, acceleration and orientation of the trailer 12, the pitch, yaw and/or the roll or any other parameter(s) relating to the movement of the trailer 12.

The monitoring system also includes an image capture device 26 including a camera mounted within the cargo holding area of the trailer 12. The camera captures images from within the trailer 12 and provides these images to the vehicle computer 18 via a wired or wireless data signal.

Referring also to Figure 3, the monitoring system also includes an interface 29 for receiving the data signals from the pressure mat 23 and a processing module 30 for processing the signals for the comparison steps of the invention, details of which are described in further detail later. The output from the processing module 30 is provided to an RF antenna 31 so that data can be transferred wirelessly to the vehicle cabin, for display or by other notification means, or alternatively the data may be transferred via a hardwire connection 32. The skilled person will appreciate that data signals may be transmitted between the various components of the monitoring system by conventional wired or wireless connections as appropriate.

The pressure mat 23 may consist of any suitable number of individual pressure sensors in the array, depending on the floor space on which the mat 23 is to be positioned. The spatial density of the pressure sensors defines the spatial resolution of the output pressure map and the resolution of the individual pressure sensors defines the pressure resolution of the output pressure map. For example, each pressure sensor may function in a binary on/off manner, i.e. providing a positive signal when the applied pressure is above a certain threshold. Alternatively, the sensors may have higher resolution which allows the pressure exerted on the floor of the trailer 12 to be evaluated more precisely by providing a graded scale pressure map (e.g. with different colours representing different applied pressures) of the floor area of the trailer 12. The output from the pressure mat 23 is referred to as the 'load data output'. The outputs from the pressure sensing array derived from the rows and columns of the array are provided to the computer system 18. One suitable pressure mat is a Tekscan® pressure mat which is suitable for medical applications, such as foot function and gait analysis.

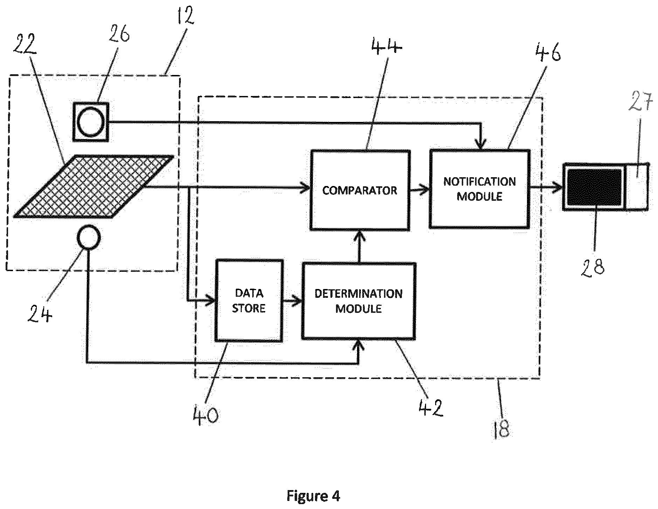

Having described the general arrangement of the monitoring system, further details of an embodiment of the invention will now be described with reference to Figure 4, which is a block diagram illustrating features of the system in more detail. In this example, the various components of the monitoring system are configured to provide outputs directly to the other relevant components. However, in an alternative configuration the system components may alternatively be configured to provide outputs to a common data bus so that any other component connected to that data bus may retrieve data from the relevant output.

The pressure sensing device 22, the IMU 24 and the image capture device 26 are all mounted in or on the vehicle trailer 12 as described previously. The monitoring system includes a human machine interface (HMI) 28 mounted within the vehicle cabin. The HMI 28 includes a display means, typically in the form of an LCD display screen, and an audio system, both of which may be used to communicate information from the vehicle computer 18 to the vehicle user about various vehicle settings or attributes. The HMI 28 is also configured to allow the user to set user preferences relating to the vehicle 10. For this purpose, the HMI 28 is provided with a user input interface. The system also includes a data store 40, a determination module 42 for processing data signals to determine acceptable states, also referred to as 'comparator' states, of cargo within the trailer 12, a comparator module 44 and a notification module 46, all represented by functional blocks in Figure 4. It should be noted that the functional blocks illustrate a specific functionality of the computer system 18 and, as such, they may be implemented on hardware, software or firmware, either within the same processing unit or on a distributed processing architecture comprising a number of processing units: reference to modules is not intended to be limiting.

A set of instructions could be provided which, when executed, cause said processing unit(s) to implement the techniques described herein (including the method(s) described below). The set of instructions may be embedded in one or more electronic processors, or alternatively, the set of instructions could be provided as software to be executed by one or more electronic processor(s). For example, a first function may be implemented in software run on one or more electronic processors, and one or more other functions may also be implemented in software run on or more electronic processors, optionally the same one or more processors as the first controller. It will be appreciated, however, that other arrangements are also useful, and therefore, the present invention is not intended to be limited to any particular arrangement. In any event, the set of instructions described above may be embedded in a computer-readable storage medium (e.g., a non-transitory storage medium) that may comprise any mechanism for storing information in a form readable by a machine or electronic processors/computational device, including, without limitation: a magnetic storage medium (e.g., floppy diskette); optical storage medium (e.g., CD-ROM); magneto optical storage medium; read only memory (ROM); random access memory (RAM); erasable programmable memory (e.g., EPROM ad EEPROM); flash memory; or electrical or other types of medium for storing such information/instructions.

That is to say, the functional architecture illustrated in Figure 4 is not intended to limit the invention to a specific hardware or software architecture, platform or processing environment. The system architecture discussed here is used merely as an example to illustrate the technical functionality of the invention and the invention may be implemented by a system having a different specific architecture.

The determination module 42 receives input signals from the data store 40 and the IMU 24. The role of the determination module 42 is to output a signal indicating the set of acceptable states of the cargo within the trailer 12 based on the input signals from the data store 40 and the IMU 24. The acceptable states of the cargo are stored in the data store 40, while the determination module 42 adjusts the acceptable states based on the output from the IMU 24 so that the acceptable states take account of any background trailer movement, as will be described in further detail later. The determination module 42 includes a sub-module in the form of a learning module which takes into account prior learnt behaviour of the system, as is also described further below.

The comparator module 44 receives input signals from the pressure sensing device 22 and the determination module 42 so as to determine if the state of cargo within the trailer 12 is acceptable. In order to do this, the comparator module 44 performs one or more algorithms to compare the state of cargo within the trailer 12, as indicated by the pressure map output of the pressure sensing device 22, with a set of acceptable states, as indicated by the output of the determination module 42. The comparator module 44 then provides an output indicating whether the state of the cargo within the trailer 12 is acceptable.

The output of the comparator module 44 is provided to the notification module 46. If the output of the comparator module 44 indicates that the state of the cargo within the trailer 12 is unacceptable, then the notification module 46 outputs a signal to the HMI 28, to notify the vehicle user that there is a problem. In this embodiment, the notification includes the display of live video feed information from the image capture device 26 via the display screen of the HMI 28, allowing the vehicle user to observe any cargo within the trailer 12.

In another configuration the determination module 42 may be arranged to determine a set of unacceptable states' of the cargo, so that the comparison steps are comparing the load data output from the pressure mat 23 with states of the cargo which are deemed unacceptable, rather than comparing with states that are deemed acceptable. In this embodiment it will be appreciated that the subsequent logic steps just need to be inverted.

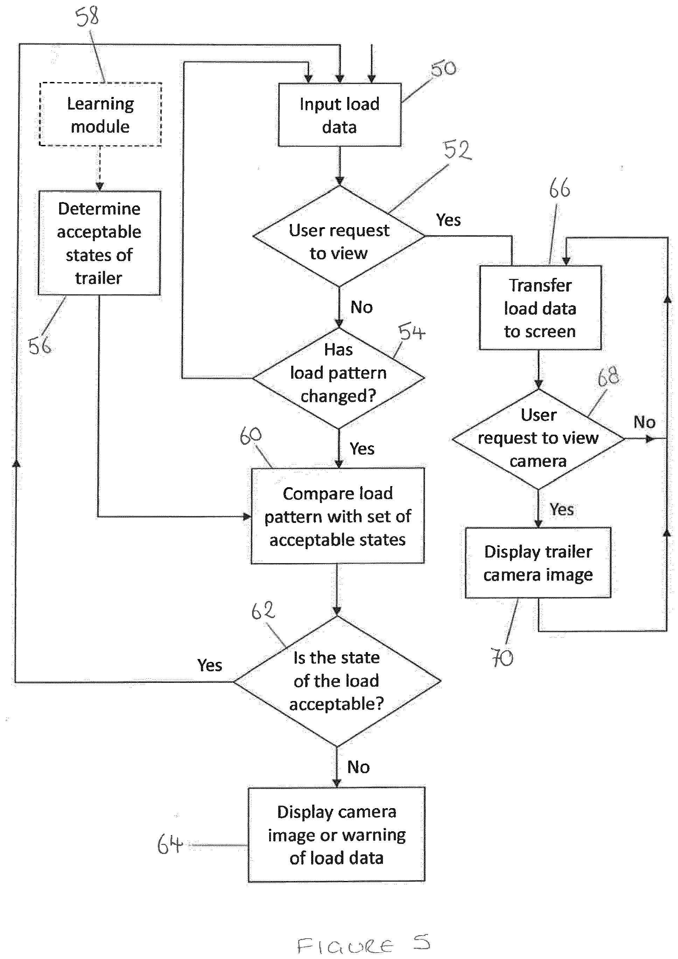

Having described the components of the monitoring system in more detail, a method that may be performed by the system described above will now described with reference to Figure 5.

At initial step 50, the pressure exerted across the floor of the trailer 12 is measured by the pressure sensing device 22 to determine the state of the cargo within the trailer 12.

At step 52, a check is made regarding whether the user wishes to view the load data output from the pressure sensing device 22, so as to make a determination of the state of the cargo within the trailer 12. If the user does not request to view the load data from the pressure sensing device 22, a check is made at step 54 about whether or not there has been a change in the latest load data output from the pressure sensing device 22 compared to the previous load data output. If there has been no change then the routine returns to the initial step 50, and the next load data output is input at the start of the sequence.

If there is a change to the load data output compared to the previous load data output, a determination is made in the determination module 42 about whether the load data output corresponds to one of the acceptable states of the cargo. At step 56, the acceptable states of the cargo within the trailer 12 are determined. The acceptable states may be pre-determined, or may be based on a learning algorithm (step 58) which monitors the behaviour of the cargo and updates the acceptable states over time as data regarding the behaviour is accumulated, as will be explained in more detail later.

At step 60, the comparator module 44 compares the output signal of the pressure sensing device 22 with the output from the determination module 42. At step 62 the comparator determines if the state of the cargo within the trailer 12 is acceptable, i.e. if the state of the cargo corresponds to one of the determined acceptable states of the cargo.

If the comparator module 44 determines that the state of the cargo within the trailer 12 is unacceptable, then at step 64 the notification module 46 notifies the vehicle user by providing a warning notification to the HMI 28. The warning notification may include the display of live image data from the image capture device 26 via the display screen of the HMI 28. Alternatively, the warning notification may be the display of load data on the display screen of the HMI 28. In other embodiments an audible warning notification may be provided to the vehicle user.

In the embodiment described with reference to Figure 5, live image data is only displayed to the vehicle user on the condition that the state of cargo within the trailer 12 is unacceptable. This advantageously prevents the user from being distracted by the HMI 28 by the constant display of images from the trailer. The image data that is notified on the occurrence of an unacceptable state may be displayed to the vehicle user for a predetermined period of time. Alternatively, the image data may be displayed until the comparator module 44 determines that the trailer 12 is no longer in an unacceptable state. Alternatively or additionally, the vehicle user may be provided with the option, via the user input interface of the HMI 28, of terminating the display of live image data when they have registered that there is a problem.

In another embodiment of the invention, the notification module 46 is configured to determine whether it is safe to display the image capture device data to the vehicle user. The notification module 46 may be configured to prevent image capture device data being displayed to the vehicle user if the vehicle is in transit and the computer system 18 determines that the vehicle is changing lanes, for example.

As discussed previously, at step 52, the user may be presented with an option, via the user input interface of the HMI 28, to view the load data output of the pressure sensing device 22 on the display screen on request, rather than waiting for an unacceptable state of the cargo to be determined. If the user requests to view the load data at step 52, then at step 66 a signal is sent to the notification module 46 to transmit load data from the pressure sensing device 22 to the HMI display screen so that the user can view the load data output. Typically this takes the form of a load pattern representative of the pattern of pressure applied to the two dimensional area of the pressure mat 23.

If, at step 68, the user then requests that the image capture device data is viewed, a signal is sent to the image capture device 26 at step 70 to transmit the image capture device data to the HMI display screen also. Therefore, live image data from the image capture device may be displayed continuously to the vehicle user.

In another embodiment, when the comparator module 44 determines that the state of the cargo within the trailer 12 is unacceptable, the HMI 28 provides a signal, for example an audible signal, which prompts the vehicle user to consult the HMI display screen. This advantageously allows the user to monitor any cargo in the trailer 12 throughout an entire journey, but they need only pay close attention to the visual display of the HMI 28 when they are alerted by the audible warning notification.

If no request to view the image capture device data is received at step 68, the process loops back to the start so that load data is only transferred to the display until such time as the user requests to view image capture device data unless an unacceptable state of the cargo is determined which leads to the automatic transfer of image capture device data.

As mentioned above, in determining the acceptable states of the trailer 12, the determination module 42 may take into account various factors depending on the sophistication of the monitoring system. Some examples will now be described by way of illustration.

As part of the comparison step, the comparator module 44 may receive pre-determined acceptable load pattern states from the data store 40 for comparison with the monitored load pattern states from the pressure sensing device 23. The pre-determined acceptable states are determined prior to use of the vehicle 10 and may typically be loaded onto the data store 40 at the point of manufacture, or may be downloadable to the data store 40 when the user is performing an initial configuration of the vehicle 10. A means may be provided for the user to select appropriate pre-determined states prior to use of the vehicle 10, for example depending on the size or weight of the horse 17 being transported.

One example of an acceptable state may be when the location of the centre of gravity of the cargo is acceptable, i.e. when the centre of gravity of the cargo gives an acceptable nose weight resulting in a stable trailer. To determine if the state of the trailer corresponds to an acceptable centre of gravity state, the centre of gravity of the cargo can be calculated from the load pattern output, for example by integrating the load data with respect to distance from the centre of gravity of the trailer, and compared to a set of acceptable centre of gravity locations.

Another example of an acceptable state may be when the weight of the horse 17 is evenly distributed across the pressure sensing mat 23, which indicates the horse 17 has adopted a natural and comfortable stance and there is no sign of distress. Another acceptable state may be represented by all four hooves of the horse 17 exerting a pressure above a certain threshold on the pressure sensing mat 23 to indicate that the horse 17 has all four hooves firmly on the ground. This is because in an unacceptable state a horse 17 may raise one or even two hooves from the floor, in which case the load pattern would only indicate three or two points at which hoof pressure is applied. Another acceptable state may require that all four of the hoof positions experience an approximately equal pressure being applied.

In another embodiment of the invention (not shown), the comparison step may be based on the frequency of movement of the horse 17, rather than on the magnitude of the pressure being applied by the hooves to the mat 23. For example, for a given horse 17 it may be expected (acceptable) that in a given period there are a certain number of 'shifts' in the load pattern as the horse 17 shifts its hooves. If, at the comparison step, it is determined that there are a greater number of shifts in the load pattern within a given period than would be expected/acceptable for the selected horse then the status of the trailer 12 is determined to be unacceptable and the vehicle user is alerted at step 58.

A further embodiment of the invention (not shown) takes account of the natural sway of the vehicle trailer 12 by adjusting the thresholds on the load pattern above which an unacceptable state is identified in response to the detected movement of the trailer 12. The IMU 24 is configured to determine the background motion of the trailer 12 for this purpose. The determination module 42 is configured to adjust or compensate the acceptable states to take into account the effect of this background movement as determined by the IMU 24. For example, if the trailer 12 is swaying more vigorously, this will have an impact on the load pattern measured by the IMU 24 as in such situations the horse 17 is likely to have more active hoof movement to steady itself, whereas if trailer sway is minimal the horse 17 is likely to adopt a more steady stance so that the magnitude of pressure applied across the mat 23 is lower. In other words, in situations where trailer sway is relatively high, an unacceptable state for the horse 17 would be identified by a load pattern which has a higher maximum pressure threshold than for minimal sway conditions.

Trailer sway may also be accounted for by adjusting the nature of the comparison between the acceptable states and the monitored load pattern. So, for example, in high sway conditions it may be less appropriate to look at the frequency of hoof movement in the load pattern, as under such conditions it would be expected that hoof movement would be relatively high. Instead, under high sway conditions it may be more appropriate to look at the maximum pressure that is detected in the load pattern, even if using a fixed maximum threshold level for all sway conditions.

In another embodiment, the acceptable states stored in the data store 40 may be based at least in part on the output of the pressure sensing device 22 during a period prior to the comparison step. So, for example, the system may be operable in a learning mode during which data is recorded by the monitoring system and the user initiates the storing of the data when the load pattern shows that the horse 17 is not distressed and is in a comfortable position/state. Once several acceptable states have been recorded in this way for a specific horse 17, the system is operable in the monitoring mode, as described above, with the acceptable states in the data store 40, to be used in the comparison step, being those which the user has recorded as being acceptable. The advantage of this is that the user, who has familiarity with the horse 17 being transported and the characteristics of the horse, is a good judge of those features of behaviour which could be deemed acceptable/unacceptable.

The system may be provided with a selection module 27 which forms part of the user input interface of the HMI 28. The selection module 27 allows the user to select the horse 17 which is being transported, for example from a list of different horse names which have been input previously. In this way, when in the learning mode, different 'acceptable state' profiles may be built up for different horses, depending on the horse 17 being transported. When the system is operated in a monitoring mode, the user initially selects the name of the horse 17 being transported which consequently causes the relevant set of acceptable states to be selected in the data store 40 for comparison with the 'live' load data output during transit.

The monitoring system of the invention is suitable for use whilst the vehicle 10 is in transit, and the horse 17 is being transported from one location to another. However, there are also circumstances in which it is necessary for the horse 17 to be left in the trailer 12 while the user leaves the vehicle 10. In this case, the system may be configured to provide the notification to the user wirelessly via a remote device 20, such as a mobile telephone or a tablet. The method described with reference to Figure 5 is carried out in the same way, but the step of the user requesting to view load data from the pressure sensing mat 23 is instead initiated on the remote device 20. The comparator module 44 and the determination module 42 still form part of the vehicle computer system 18, but the notification module 46 is configured to provide an output signal to the remote device 20 so that that actual notification, be it a warning to the driver, a load pattern from the pressure sensing device 22 or data from the image capture device 26, is provided via the remote device 20. For this purpose the remote device 20 may be programmed with suitable software in the form of an 'app' to present the requested notification and/or image and/or data.

The invention is not limited to the transportation of horses, nor indeed livestock, and is applicable in general to the transportation of any cargo, especially where that cargo is not immediately visible to the driver of the vehicle. For example, the monitoring system may be used to monitor the transportation of vehicles on a vehicle transporter, or to removal vans transporting furniture or large objects. In any case, the system is operable in a learning mode whereby the user of the vehicle can pre-store acceptable states for a specific type of cargo, which can then be selected for use in the monitoring mode at a later time.

In general, for cargo other than livestock, the acceptable state of the cargo may be defined as a state in which the cargo within the cargo holding area will not cause danger for the vehicle user or damage to the cargo or the vehicle. The threshold on the load pattern which is deemed to be an acceptable maximum pressure threshold may be adjustable by the user depending on the nature of the cargo being transported. So, for example, for more fragile cargo, such as glass objects or expensive furniture, the acceptable maximum pressure threshold may be lower. The selection module 27 may be configured to allow the user to select the appropriate maximum pressure threshold level depending on the nature of the cargo being transported. In another embodiment, the system includes a cargo determination module so that once the cargo is loaded, a determination of the size and/or weight and/or standing pressure applied by the cargo to the pressure mat 23 is used to determine the nature of the cargo being transported. For example, in a furniture delivery vehicle, such indicators may be used to distinguish between large, heavy objects with a steady footprint, and relatively lightweight, unsteady objects with a small footprint objects, such as lamps and smaller furniture. The acceptable states of the cargo within the cargo holding area may be defined by acceptable variations in the centre of gravity of the cargo from an initial centre of gravity determination. These acceptable variations may be determined according to the nature of the cargo.

It will be appreciated by a person skilled in the art that the invention could be modified to take many alternative forms without departing from the scope of the appended claims.

## Claims

1. A monitoring system configured to monitor a cargo holding area (12) associated with a vehicle (10) during transit, the system comprising:
a pressure sensing device (22) locatable within the cargo holding area (12), in use, and configured to provide live load data output indicative of the pressure applied to the pressure sensing device by cargo (17) within the cargo holding area (12) during transit;
a determination module (42) for outputting one or more predetermined load pattern states of the cargo (17);
a movement sensor (24) for determining movement of the cargo holding area (12);
a comparator module (44) configured to compare the live load data output with the one or more predetermined load pattern states of the cargo (17) and to determine whether there is a correspondence therebetween; and
a notification module (46) configured to output a notification that the cargo (17) is in an unacceptable state during transit in dependence on the result of the comparison;
wherein the determination module (44) is configured to receive a movement output from the movement sensor (24) and to adjust the one or more predetermined load pattern states of the cargo (17) in response to the movement output.

2. The monitoring system as claimed in claim 1, wherein the pressure sensing device (22) comprises a pressure sensitive mat (23) configured for mounting on the floor of the cargo holding area (12), upon which cargo (17) is placed, wherein the pressure sensitive mat (23) optionally comprises a two dimensional array of pressure sensitive devices, and wherein the live load data output of the pressure sensing device (22) is optionally in the form of a two dimensional pressure map for comparison with one or more two-dimensional pressure maps representing the predetermined load pattern states of the cargo (17).

3. The monitoring system as claimed in claim 1 or claim 2, wherein the determination module (42) includes a learning module for updating the predetermined load pattern states based on the live load data output of the pressure sensing device (22) during periods prior to the comparison taking place for which the state of the cargo (17) is acceptable.

4. The monitoring system as claimed in any preceding claim, comprising an output to a visual display, wherein the notification module (46) is configured to output the notification via the output to the visual display.

5. The monitoring system as claimed in claim 4, wherein the monitoring system comprises an image capture device (26) for capturing image data from the cargo holding area (12) and the notification module (46) is optionally configured to provide captured image data to the output to the visual display only in the event that the cargo (17) is determined to be in an unacceptable state.

6. The monitoring system as claimed in any preceding claim, comprising a human machine (HMI) interface (28) configured to permit user inputs relating to the type of cargo (17) to be transported within the cargo holding area (12).

7. The monitoring system as claimed in any preceding claim, wherein the comparator module (44) is configured to compare the live load data output from the pressure sensing device (22) with a pressure threshold representative of pressure applied to one or more points on the pressure sensing device (22) or with one or more predetermined load pattern states of the cargo (17) in the form of a frequency of change of pressure applied to one or more selected location on the pressure sensing device (22), thereby to determine whether there is a correspondence with the one or more predetermined load pattern states of the cargo (17).

8. A method of monitoring a cargo holding area (12) associated with a vehicle (10) during transit, the method comprising:
sensing a pressure applied by cargo (17) within the cargo-holding area (12) and providing live load data output indicative of the pressure applied by cargo (17) within the cargo holding area (12) during transit;
receiving a movement output from a movement sensor (24) indicating movement of the cargo holding area (12);
determining whether the live load data output corresponds to one or more predetermined load pattern states of the cargo (17); and
outputting a notification that the cargo (17) is in an unacceptable state during transit in dependence of the result of the comparison;
wherein the one or more predetermined load pattern states of the cargo (17) are adjusted in response to the movement output.

9. The method as claimed in claim 8, comprising determining the type of cargo (17) to be transported within the cargo holding area (12).

10. The method as claimed in claim 8 or claim 9, comprising updating the predetermined load pattern states based on the pressure applied by the cargo (17) within the cargo holding area (12) during periods prior to determining whether the live load data output corresponds to one or more predetermined load pattern states of the cargo (17), the periods prior to determining whether the live load data output corresponds to one or more predetermined load pattern states of the cargo (17) optionally being user-selectable periods when a user determines that the state of the cargo (17) is acceptable.

11. The method as claimed in any of claims 8 to 10, comprising comparing the pressure applied by cargo (17) in the cargo holding area (12) with a pressure threshold or with one or more predetermined load pattern states of the cargo (17) in the form of a frequency of change of pressure applied to determine whether there is a correspondence with the one or more predetermined load pattern states of the cargo (17).

12. A computer program product comprising a non-transitory computer readable medium including computer readable program code, wherein the computer readable program code when executed causes a processor to implement the method of any of claims 8 to 11.

13. A vehicle (10) comprising the monitoring system of any of claims 1 to 7, the vehicle (10) having an associated cargo holding area (12) including a floor carrying the pressure sensing device (22).

## Patentansprüche

1. Überwachungssystem, das konfiguriert ist, um einen Laderaumbereich (12), der einem Fahrzeug (10) zugeordnet ist, während eines Transits zu überwachen, wobei das System Folgendes umfasst:
einen Druckfühler (22), der während des Gebrauchs innerhalb des Laderaumbereichs (12) lokalisierbar sein kann und konfiguriert ist, um eine Verkehrslastdatenausgabe bereitzustellen, die den Druck angibt, der während des Transits durch die Ladung (17) innerhalb des Laderaumbereichs (12) auf den Druckfühler ausgeübt wird;
ein Bestimmungsmodul (42) zum Ausgeben eines oder mehrerer vorbestimmter Lastprofilzustände der Ladung (17);
einen Bewegungssensor (24) zum Bestimmen einer Bewegung des Laderaumbereichs (12);
ein Vergleichsmodul (44), das konfiguriert ist, um die Verkehrslastdatenausgabe mit dem einen oder den mehreren vorbestimmten Lastprofilzuständen der Ladung (17) zu vergleichen und zu bestimmen, ob eine Entsprechung dazwischen besteht; und
ein Benachrichtigungsmodul (46), das konfiguriert ist, um eine Benachrichtigung auszugeben, dass sich die Ladung (17) während des Transits in einem inakzeptablen Zustand befindet, in Abhängigkeit von dem Ergebnis des Vergleichs;
wobei das Bestimmungsmodul (44) konfiguriert ist, um eine Bewegungsausgabe von dem Bewegungssensor (24) zu empfangen und den einen oder die mehreren vorbestimmten Lastprofilzustände der Ladung (17) als Reaktion auf die Bewegungsausgabe einzustellen.

2. Überwachungssystem nach Anspruch 1, wobei der Druckfühler (22) eine druckempfindliche Matte (23) umfasst, die konfiguriert ist, um auf dem Boden des Laderaumbereichs (12) montiert zu werden, auf der eine Ladung (17) platziert wird, wobei die druckempfindliche Matte (23) optional eine zweidimensionale Anordnung von druckempfindlichen Vorrichtungen umfasst, und wobei die Verkehrslastdatenausgabe des Druckfühlers (22) optional in der Form einer zweidimensionalen Druckkarte zum Vergleich mit einer oder mehreren zweidimensionalen Druckkarten vorliegt, die die vorbestimmten Lastprofilzustände der Ladung (17) darstellen.

3. Überwachungssystem nach Anspruch 1 oder 2, wobei das Bestimmungsmodul (42) ein Lernmodul zum Aktualisieren der vorbestimmten Lastprofilzustände basierend auf der Verkehrslastdatenausgabe des Druckfühlers (22) während Zeiträumen, bevor der Vergleich stattfindet, für die der Zustand der Ladung (17) akzeptabel ist, beinhaltet.

4. Überwachungssystem nach einem der vorhergehenden Ansprüche, umfassend eine Ausgabe zu einer Sichtanzeige, wobei das Benachrichtigungsmodul (46) konfiguriert ist, um die Benachrichtigung über die Ausgabe an die Sichtanzeige auszugeben.

5. Überwachungssystem nach Anspruch 4, wobei das Überwachungssystem eine Bilderfassungsvorrichtung (26) zum Erfassen von Bilddaten von dem Laderaumbereich (12) umfasst und das Benachrichtigungsmodul (46) optional konfiguriert ist, um erfasste Bilddaten zu der Ausgabe an die Sichtanzeige nur in dem Fall bereitzustellen, dass bestimmt wird, dass sich die Ladung (17) in einem inakzeptablen Zustand befindet.

6. Überwachungssystem nach einem der vorhergehenden Ansprüche, umfassend eine Mensch-Maschine-Schnittstelle (*human machine interface-* HMI) (28), die konfiguriert ist, um Benutzereingaben in Bezug auf die Art der innerhalb des Laderaumbereichs (12) zu transportierenden Ladung (17) zu erlauben.

7. Überwachungssystem nach einem der vorhergehenden Ansprüche, wobei das Vergleichsmodul (44) konfiguriert ist, um die Verkehrslastdatenausgabe von dem Druckfühler (22) mit einem Druckschwellenwert, der den auf einen oder mehrere Punkte auf dem Druckfühler (22) ausgeübten Druck darstellt, oder mit einem oder mehreren vorbestimmten Lastprofilzuständen der Ladung (17) in der Form einer Frequenz einer Änderung des Drucks, der auf eine oder mehrere ausgewählte Stellen auf dem Druckfühler (22) ausgeübt wird, zu vergleichen, wobei dadurch bestimmt werden soll, ob eine Entsprechung mit dem einen oder den mehreren vorbestimmten Lastprofilzuständen der Ladung (17) vorliegt.

8. Verfahren zum Überwachen eines Laderaumbereichs (12), der einem Fahrzeug (10) zugeordnet ist, während des Transits, wobei das Verfahren Folgendes umfasst:
Abfühlen eines Drucks, der von der Ladung (17) innerhalb des Laderaumbereichs (12) ausgeübt wird, und Bereitstellen einer Verkehrslastdatenausgabe, die den Druck angibt, der von der Ladung (17) innerhalb des Laderaumbereichs (12) während des Transits ausgeübt wird;
Empfangen einer Bewegungsausgabe von einem Bewegungssensor (24), der die Bewegung des Laderaumbereichs (12) angibt;
Bestimmen, ob die Verkehrslastdatenausgabe einem oder mehreren vorbestimmten Lastprofilzuständen der Ladung (17) entspricht; und
Ausgeben einer Benachrichtigung, dass sich die Ladung (17) während des Transits in einem inakzeptablen Zustand befindet, in Abhängigkeit von dem Ergebnis des Vergleichs;
wobei der eine oder die mehreren vorbestimmten Lastprofilzustände der Ladung (17) als Reaktion auf die Bewegungsausgabe eingestellt werden.

9. Verfahren nach Anspruch 8, umfassend ein Bestimmen der Art der Ladung (17), die innerhalb des Laderaumbereichs (12) zu transportieren ist.

10. Verfahren nach Anspruch 8 oder 9, umfassend ein Aktualisieren der vorbestimmten Lastprofilzustände basierend auf dem Druck, der von der Ladung (17) innerhalb des Laderaumbereichs (12) während Zeiträumen vor dem Bestimmen, ob die Verkehrslastdatenausgabe einem oder mehreren vorbestimmten Lastprofilzuständen der Ladung (17) entspricht, ausgeübt wird, wobei die Zeiträume vor dem Bestimmen, ob die Verkehrslastdatenausgabe einem oder mehreren vorbestimmten Lastprofilzuständen der Ladung (17) entspricht, optional von einem Benutzer auswählbare Zeiträume sind, wenn ein Benutzer bestimmt, dass der Zustand der Ladung (17) akzeptabel ist.

11. Verfahren nach einem der Ansprüche 8 bis 10, umfassend ein Vergleichen des Drucks, der von der Ladung (17) in dem Laderaumbereich (12) ausgeübt wird, mit einem Druckschwellenwert oder mit einem oder mehreren vorbestimmten Lastprofilzuständen der Ladung (17) in der Form einer Frequenz einer Änderung des Drucks, der ausgeübt wird, um zu bestimmen, ob eine Entsprechung mit dem einen oder den mehreren vorbestimmten Lastprofilzuständen der Ladung (17) vorliegt.

12. Computerprogrammprodukt, umfassend ein nicht flüchtiges computerlesbares Medium, das computerlesbaren Programmcode beinhaltet, wobei der computerlesbare Programmcode, wenn er ausgeführt wird, einen Prozessor dazu veranlasst, das Verfahren nach einem der Ansprüche 8 bis 11 zu implementieren.

13. Fahrzeug (10), umfassend das Überwachungssystem nach einem der Ansprüche 1 bis 7, wobei das Fahrzeug (10) einen zugeordneten Laderaumbereich (12) aufweist, der einen Boden beinhaltet, der den Druckfühler (22) trägt.

## Revendications

1. Système de surveillance configuré pour surveiller une zone de retenue de cargaison (12) associée à un véhicule (10) pendant le transit, le système comprenant :
un dispositif de détection de pression (22) pouvant être localisé à l'intérieur de la zone de retenue de cargaison (12), en utilisation, et configuré pour fournir une sortie de données de charge utile indiquant la pression appliquée au dispositif de détection de pression par la cargaison (17) dans la zone de retenue de cargaison (12) pendant son transit ;
un module de détermination (42) pour délivrer en sortie une ou plusieurs charges prédéterminées les états de configuration de la cargaison (17) ;
un capteur de mouvement (24) pour déterminer le mouvement de la zone de retenue de cargaison (12) ;
un module comparateur (44) configuré pour comparer la sortie de données de charge utile avec un ou plusieurs états de configuration de charge prédéterminés de la cargaison (17) et pour déterminer s'il existe une correspondance entre eux ; et
un module de notification (46) configuré pour délivrer une notification indiquant que la cargaison (17) est dans un état inacceptable pendant le transit en fonction du résultat de la comparaison ;
dans laquelle le module de détermination (44) est configuré pour recevoir un mouvement du capteur de mouvement (24) et pour ajuster le ou les états de configuration de charge prédéterminés de la cargaison (17) en réponse à la sortie de mouvement.

2. Système de surveillance selon la revendication 1, dans lequel le dispositif de détection de pression
(22) comprend un tapis sensible à la pression (23) configuré pour être monté sur le plancher de
la zone de retenue de cargaison (12), sur laquelle la cargaison (17) est placée, dans laquelle le tapis sensible à la pression (23) comprend facultativement un réseau bidimensionnel de dispositifs sensibles à la pression, et dans laquelle la sortie de données de charge utile du dispositif sensible à la pression (22) est facultativement sous la forme d'une carte de pression bidimensionnelle pour comparaison avec une ou plusieurs cartes de pression bidimensionnelle représentant les états prédéterminés du modèle de charge de la cargaison (17).

3. Système de surveillance selon la revendication 1 ou la revendication 2, dans lequel le module de détermination (42) comprend un module d'apprentissage pour mettre à jour les états de configuration de charge prédéterminés sur la base de la sortie de données de surcharge du dispositif de détection de pression (22) pendant les périodes précédant la comparaison, pour lesquelles l'état de la charge (17) est acceptable.

4. Système de surveillance tel que revendiqué dans toute revendication précédente, comprenant une sortie vers un affichage visuel, dans lequel le module de notification (46) est configuré pour délivrer la notification via la sortie vers l'affichage visuel.

5. Système de surveillance selon la revendication 4, dans lequel le système de surveillance comprend un dispositif de capture d'image (26) pour capturer des données d'image à partir de la zone de retenue de cargaison (12) et le module de notification (46) est configuré en option pour fournir des données d'image capturées à la sortie sur l'affichage visuel uniquement dans le cas où la cargaison (17) est déterminée comme étant dans un état inacceptable.

6. Système de surveillance tel que revendiqué dans toute revendication précédente, comprenant une interface homme-machine (IHM) (28) configurée pour permettre à l'utilisateur d'entrer des données relatives au type de cargaison (17) à transporter dans la zone d'attente (12) du fret.

7. Système de surveillance tel que revendiqué dans toute revendication précédente, dans lequel le module comparateur (44) est configuré pour comparer les données de charge utile délivrées par le dispositif de détection de pression (22) avec un seuil de pression représentatif de la pression appliquée en un ou plusieurs points du dispositif de détection de pression (22) ou avec un ou plusieurs états prédéterminés du motif de charge du chargement (17) sous forme d'une fréquence de changement de pression appliquée à un ou plusieurs emplacements sélectionnés du dispositif de détection de pression (22), pour déterminer de la sorte si une correspondance existe avec l'état prédéterminé ou plusieurs des configurations de charge du chargement (17).

8. Procédé de surveillance d'une zone de retenue de cargaison (12) associée à un véhicule (10) pendant le transit, le procédé comprenant :
détecter une pression appliquée par la cargaison (17) à l'intérieur de la zone de retenue de cargaison (12) et fournir des données de sortie de surcharge indiquant la pression appliquée par la cargaison (17) à l'intérieur de la zone de retenue de cargaison (12) pendant le transit ;
la réception d'une sortie de mouvement provenant d'un capteur de mouvement (24) indiquant le mouvement de la zone de retenue de la cargaison (12) ;
déterminer si la sortie de données sur la charge utile correspond à un ou plusieurs états de configuration de charge prédéterminés de la cargaison (17) ; et
l'émission d'une notification indiquant que la cargaison (17) est dans un état inacceptable pendant
en fonction du résultat de la comparaison ;
dans laquelle le ou les un ou plusieurs états de configuration de charge prédéterminés de la charge (17) sont ajustés en réponse à la sortie de mouvement.

9. Procédé selon la revendication 8, comprenant la détermination du type de cargaison (17) à transporter dans la zone d'attente de cargaison (12).

10. Procédé selon la revendication 8 ou la revendication 9, comprenant la mise à jour des états de configuration de charge prédéterminés sur la base de la pression appliquée par la cargaison (17) dans la zone de retenue de la cargaison (12) pendant des périodes avant de déterminer si la sortie de données de charge utile correspond à un ou plusieurs états de configuration de charge prédéterminés de la cargaison (17), les périodes avant de déterminer si la sortie de données de charge utile correspond à un ou plusieurs états de configuration de charge utile prédéterminés de la cargaison (17) pouvant être sélectionnées éventuellement par un utilisateur lorsque celui-ci détermine que l'état de la cargaison (17) est acceptable.

11. Procédé tel que revendiqué dans l'une quelconque des revendications 8 à 10, comprenant la comparaison de la pression
appliqué par une cargaison (17) dans la zone de retenue de cargaison (12) avec un seuil de pression ou avec un ou plusieurs états de configuration de charge prédéterminés de la cargaison (17) sous la forme d'un changement de fréquence de la pression appliquée pour déterminer s'il y a une correspondance avec un ou plusieurs états de configuration de charge prédéterminés de la cargaison (17).

12. Produit de programme d'ordinateur comprenant un support lisible par ordinateur non transitoire comprenant un code de programme lisible par ordinateur, dans lequel le code de programme lisible par ordinateur lorsqu'il est exécuté amène un processeur à mettre en oeuvre le procédé de l'une quelconque des revendications 8 à 11.

13. Véhicule (10) comprenant le système de surveillance de l'une quelconque des revendications 1 à 7, le véhicule
(10) ayant une zone de retenue de cargaison associée (12) comprenant un plancher portant le dispositif de détection de pression (22).
